# EUROPEAN PATENT APPLICATION

(11) **EP 4 465 702 A1**
(43) Date of publication of application: **20.11.2024**
(21) Application number: 22919800.7
(22) Date of filing: 11.08.2022
(51) Int. Cl.: H04W 48/16

(54) **INFORMATION RECEIVING METHOD, INFORMATION SENDING METHOD, COMMUNICATION NODE AND STORAGE MEDIUM**

(30) Priority: 14.01.2022 CN 202210044515
(71) Applicant: ZTE Corporation, Shenzhen, Guangdong 518057 (CN)
(72) Inventor: BIAN, Luanjian, Shenzhen, Guangdong 518057 (CN); DAI, Bo, Shenzhen, Guangdong 518057 (CN); HU, Youjun, Shenzhen, Guangdong 518057 (CN); LIU, Kun, Shenzhen, Guangdong 518057 (CN); YANG, Weiwei, Shenzhen, Guangdong 518057 (CN)
(74) Representative: Aipex B.V.
(86) International application number: PCT/CN2022/111804
(87) International publication number: WO 2023/134163

(57) **Abstract**

Provided are an information receiving method, an information sending method, a communication node, and a storage medium. The information receiving method includes receiving, S 110, first information sent by a second communication node; and determining, S 120, a temporary ID of the second communication node according to a resource serial number of a transmission resource used for transmission of the first information. The temporary ID includes a bit sequence corresponding to the resource serial number. The resource serial number includes at least one of the following: a round serial number, a slot serial number, a group serial number, a spreading code serial number, or a subchannel serial number.

## Description

This application claims priority to Chinese Patent Application No. 202210044515.6 filed Jan. 14, 2022, the disclosure of which is incorporated herein by reference in its entirety.

### TECHNICAL FIELD

The present application relates to the field of communication technology, for example, an information receiving method, an information sending method, a communication node, and a storage medium.

### BACKGROUND

In radio-frequency identification (RFID), when a reader/writer sends information to a passive terminal individually, the information requires to carry a temporary identifier (ID) associated with the passive terminal. If the passive terminal determines that the received temporary ID is the same as the temporary ID of the passive terminal, it is determined that the information is valid. The temporary ID is generally a random number up to 16 bits generated by the passive terminal and sent to the reader/writer through uplink information. After confirming that the uplink information of the passive terminal is correctly received, the reader/writer may send commands and information to the passive terminal by using the temporary ID. However, the passive communication technology based on a cellular network has a larger coverage area and is connected to more passive terminals. Thus, because of a large number of passive terminals, different passive terminals in RFID may have the same temporary ID and thus cannot be distinguished from each other. Moreover, passive communication uses single-carrier modulation transmission; therefore, the more the bits in data transmission, the longer the transmission duration.

### SUMMARY

An embodiment of the present application provides an information receiving method. The method is applied to a first communication node. The method includes receiving first information sent by a second communication node; and determining a temporary ID of the second communication node according to a resource serial number of a transmission resource used for transmission of the first information. The temporary ID includes a bit sequence corresponding to the resource serial number. The resource serial number includes at least one of the following: a round serial number, a slot serial number, a group serial number, a spreading code serial number, or a subchannel serial number.

An embodiment of the present application provides an information sending method. The method is applied to a second communication node. The method includes sending first information to a first communication node; and determining a temporary ID of the second communication node according to a resource serial number of a transmission resource used for transmission of the first information. The temporary ID includes a bit sequence corresponding to the resource serial number. The resource serial number includes at least one of the following: a round serial number, a slot serial number, a group serial number, a spreading code serial number, or a subchannel serial number.

An embodiment of the present application provides a communication node. The node includes a processor configured to perform the method of any previous embodiment when executing a computer program.

An embodiment of the present application provides a computer-readable storage medium storing a computer program which, when executed by a processor, causes the processor to perform the method of any previous embodiment.

The preceding embodiments and other aspects of the present application and implementations thereof are described in more detail in the brief description of drawings, detailed description, and claims.

### BRIEF DESCRIPTION OF DRAWINGS

FIG. 1 is a networking diagram of a wireless communication system according to an embodiment.
FIG. 2 is a flowchart of an information receiving method according to an embodiment.
FIG. 3 is a flowchart of another information receiving method according to an embodiment.
FIG. 4 is a flowchart of another information receiving method according to an embodiment.
FIG. 5 is a flowchart of an information sending method according to an embodiment.
FIG. 6 is a flowchart of another information sending method according to an embodiment.
FIG. 7 is a flowchart of another information sending method according to an embodiment.
FIG. 8 is a diagram illustrating the structure of an information receiving apparatus according to an embodiment.
FIG. 9 is a diagram illustrating the structure of another information receiving apparatus according to an embodiment.
FIG. 10 is a diagram illustrating the structure of an information sending apparatus according to an embodiment.
FIG. 11 is a diagram illustrating the structure of another information sending apparatus according to an embodiment.
FIG. 12 is a diagram illustrating the structure of a base station according to an embodiment.
FIG. 13 is a diagram illustrating the structure of a UE according to an embodiment.

### DETAILED DESCRIPTION

It is to be understood that the embodiments described herein are intended to explain the present application, not to limit the present application. Embodiments of the present application are described hereinafter in detail in conjunction with drawings.

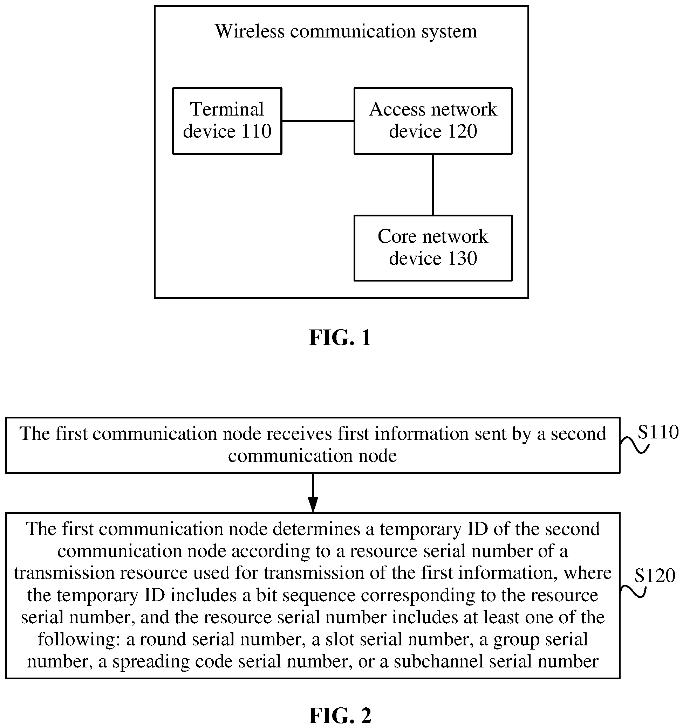

The information receiving method and the information sending method of the present application may be applied to various wireless communication systems, for example, a long-term evolution (LTE) system, a 4th-generation (4G) system, a 5th-generation (5G) system, an LTE-5G hybrid architecture system, a 5G New Radio (NR) system, and a new communication system such as a 6th-generation (6G) system in future communications. FIG. 1 is a networking diagram of a wireless communication system according to an embodiment. As shown in FIG. 1, the wireless communication system includes a terminal device 110, an access network device 120, and a core network device 130.

The terminal device 110 may be a wireless transceiving device that may be deployed on land (for example, indoor or outdoor, handheld, worn, or in-vehicle), deployed on the water surface (such as a ship), or deployed in the air (for example, aircraft, balloon, or satellite). The terminal device 110 may be, for example, a passive terminal, a user equipment (UE), a mobile phone, a mobile station, a tablet computer, a notebook computer, an ultra-mobile personal computer (UMPC), a handheld computer, a netbook, a personal digital assistant (PDA), another user equipment connectable to a network, a virtual reality (VR) terminal, an augmented reality (AR) terminal, an industrial control terminal, a wireless terminal in self-driving, a wireless terminal in remote medicine, a wireless terminal in a smart grid, a wireless terminal in transportation safety, a wireless terminal in a smart city, a wireless terminal in a smart home, an IoT node in the Internet of Things, a vehicle-mounted communication apparatus in vehicle-to-everything, an entertainment or gaming device or system, or a global positioning system (GPS) device. Embodiments of the present application do not limit technologies and forms used by the terminal device. The terminal device may be referred to as a terminal.

The access network device 120 is an access device through which the terminal device 110 accesses the wireless communication system in a wireless manner. The access network device 120 may be, for example, a reader/writer, a base station, an evolved NodeB (eNB or eNodeB) in long-term evolution advanced (LTEA), a transmission reception point (TRP), a base station or next-generation NodeB (gNB) in a 5G mobile communication system, a base station in a future mobile communication system, or an access node in a Wireless Fidelity (Wi-Fi) system. The base station may be, for example, a macro base station, a micro base station, a home base station, a wireless remote station, a router, a Wi-Fi device, a primary-cell device, a secondary-cell device, another network device, or a location management function (LMF) device. The access network device 120 may also be a module or unit for implementing some functions of the base station, for example, a central unit (CU) or a distributed unit (DU). Embodiments of the present application do not limit technologies and forms used by the access network device. The access network device may be referred to as a base station.

The core network device 130 may be, for example, an access and mobility management network element or a session management network element. Illustratively, the terminal device 110 may access the core network through the access network device 120 to perform data transmission.

In an information receiving method, an information sending method, a communication node, and a storage medium provided according to embodiments of the present application, a temporary ID is determined by a resource serial number of a transmission resource used for transmission of first information. The temporary ID helps to identify and distinguish between different terminal devices, thereby preventing a temporary-ID conflict between terminal devices. Moreover, this solution can reduce the bit overhead of a dedicated temporary ID in uplink information, reduce the transmission duration, and improve the recognition efficiency.

The following describes the information receiving method, the information sending method, the communication node, and the technical effects thereof.

FIG. 2 is a flowchart of an information receiving method according to an embodiment. As shown in FIG. 2, the method of this embodiment is applied to a first communication node. In this example, the first communication node (also referred to as a first communication node device) may be a base station, and the second communication node (also referred to as a second communication node device) may be a terminal device. The method includes S 110 and S120.

In S 110, the first communication node receives first information sent by a second communication node.

In an embodiment, the first information may be uplink response information.

In S 120, the first communication node determines a temporary ID of the second communication node according to a resource serial number of a transmission resource used for transmission of the first information, where the temporary ID includes a bit sequence corresponding to the resource serial number, and the resource serial number includes at least one of the following: a round serial number, a slot serial number, a group serial number, a spreading code serial number, or a subchannel serial number.

In an embodiment, the resource serial number satisfies at least one of the following features: The resource serial number includes the round serial number, where the round serial number is determined according to the number of times a slot value range is updated; or the resource serial number includes the slot serial number, where the slot serial number is determined according to a slot in which the first information is correctly received; or the resource serial number includes the group serial number, where the group serial number is determined according to a group where the first information is correctly received; or the resource serial number includes the spreading code serial number, where the spreading code serial number is determined according to a spreading code through which despreading is correctly performed; or the resource serial number includes the subchannel serial number, where the subchannel serial number is determined according to a subchannel where the first information is located.

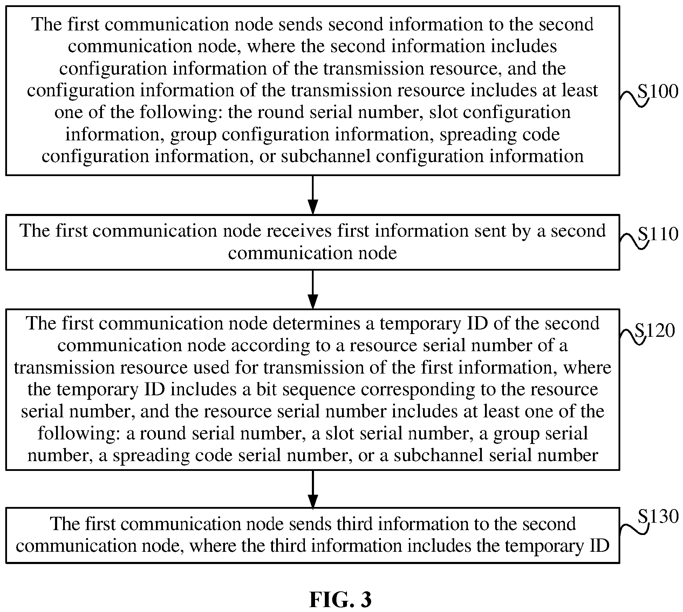

Based on the previous embodiment, FIG. 3 is a flowchart of another information receiving method according to an embodiment. As shown in FIG. 3, the method includes S100, S110, S120, and S130.

In S100, the first communication node sends second information to the second communication node, where the second information includes configuration information of the transmission resource, and the configuration information of the transmission resource includes at least one of the following: the round serial number, slot configuration information, group configuration information, spreading code configuration information, or subchannel configuration information. The second information may be command information including the configuration information of the transmission resource. The configuration information of the transmission resource includes at least one of the following: the round serial number, slot configuration information, group configuration information, spreading code configuration information, or subchannel configuration information.

In S110, the first communication node receives first information sent by a second communication node.

In an embodiment, the first information includes any one of the following two forms.

Form one: The first information includes the unique product number of the second communication node.

Form two: The first information includes a random number of n bits or n bits in the unique product number of the second communication node.

In S120, the first communication node determines a temporary ID of the second communication node according to a resource serial number of a transmission resource used for transmission of the first information, where the temporary ID includes a bit sequence corresponding to the resource serial number, and the resource serial number includes at least one of the following: a round serial number, a slot serial number, a group serial number, a spreading code serial number, or a subchannel serial number.

The temporary ID includes a bit sequence corresponding to the resource serial number, that is, the temporary ID includes at least one of the following: a bit corresponding to the value of the round serial number, a bit corresponding to the value of the slot serial number, a bit corresponding to the value of the group serial number, a bit corresponding to the value of the spreading code serial number, or a bit corresponding to the value of the subchannel serial number.

In the present application, the first communication node determines the resource serial number in the following manner: When the resource serial number includes the round serial number, one round is counted each time the slot value range is updated, and the number of times the slot value range is updated corresponds to the round serial number. For example, sending of the second information by the first communication node for the first time corresponds to the round serial number 0, sending of the second information by the first communication node for the second time corresponds to the round serial number 1, and sending of the second information by the first communication node for the third time corresponds to the round serial number 2. Then, the round serial number of the second communication node may be determined according to the number of times the slot value range is updated; or each time a new round starts, the first communication node notifies the round serial number to the second communication node.

Specifically, after the first communication node correctly receives the first information sent by the second communication node, the current round serial number is determined as the round serial number of the second communication node.

When the resource serial number includes the slot serial number, if the first communication node correctly receives the first information in a slot, the slot serial number of the second communication node that sends the first information is determined according to the slot. For example, the slot value randomly selected by the second communication node is S, the first information is sent in the slot corresponding to the slot value S, and the first communication node correctly receives the first information in the slot. In this case, it is determined that the slot serial number of the second communication node is S.

When the resource serial number includes the group serial number, the first communication node indicates a second communication node group, and the second communication node in the group sends the first information. If the first communication node correctly receives the first information within the time of the group, it is determined that the second communication node that sends the first information has the group serial number of the group.

When the resource serial number includes the spreading code serial number, the first communication node determines the spreading code serial number of the second communication node according to a spreading code through which despreading is correctly performed. Specifically, the first communication node receives the first information and despreads the first information by using the spreading code in the spreading code set, where the serial number corresponding to the spreading code through which the first information is correctly despreaded is the spreading code serial number of the second communication node. Alternatively, with a given spreading code length, spreading codes are in one-to-one correspondence with spreading code serial numbers, and a spreading code serial number can be determined according to a spreading code.

When the resource serial number includes the subchannel serial number, the first communication node determines the subchannel serial number of the second communication node according to the subchannel where the first information sent by the second communication node is located. Specifically, the first communication node receives the first information, and the subchannel serial number of the second communication node is determined according to the subchannel on the frequency domain occupied by the first information. The subchannel is a transmission frequency band in the frequency domain. The subchannel may be a narrowband or a subcarrier.

In an embodiment, the temporary ID also includes the first information. Specifically, the temporary ID includes the bit sequence corresponding to the resource serial number and the bit sequence of the first information.

In S 130, the first communication node sends third information to the second communication node, where the third information includes the temporary ID.

After correctly receiving the first information sent by the second communication node and determining the temporary ID of the second communication node, the first communication node sends the third information including the temporary ID to the second communication node.

In an embodiment, the third information may be confirmation information. The third information is used by the second communication node to determine whether the temporary ID determined by the node matches the received temporary ID. If the temporary ID determined by the node matches the received temporary ID, it is determined that the temporary ID and the third information are valid. If the temporary ID determined by the node does not match the received temporary ID, the first information is sent again by using the updated transmission resource.

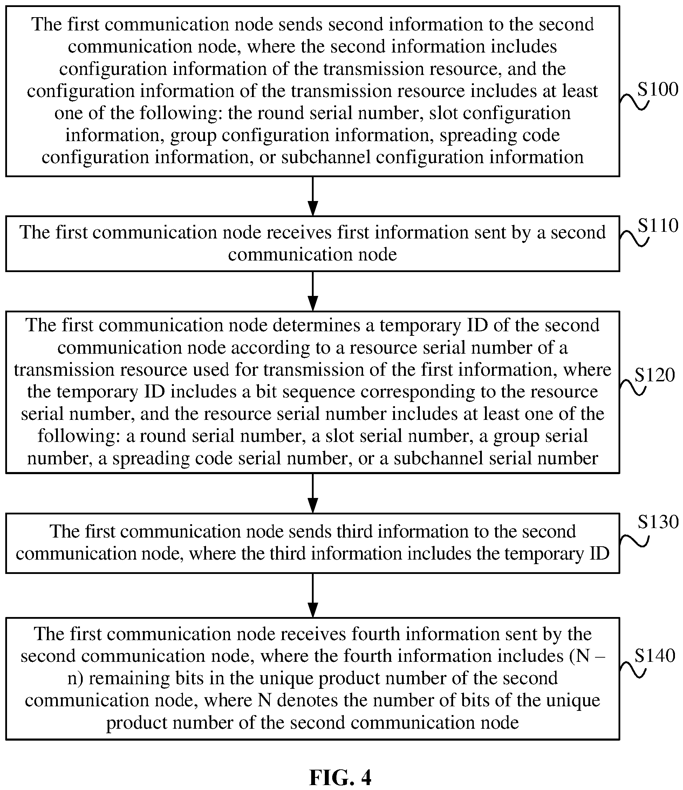

In an embodiment, if the first information includes n bits in the unique product number of the second communication node, as shown in FIG. 4, a flowchart of another information receiving method according to an embodiment, the method also includes S140.

In S 140, the first communication node receives fourth information sent by the second communication node, where the fourth information includes (N - n) remaining bits in the unique product number of the second communication node, where N denotes the number of bits of the unique product number of the second communication node.

If the first information includes n bits in the unique product number of the second communication node, the fourth information requires to include only (N - n) remaining bits in the unique product number of the second communication node, thereby reducing the bit overhead of a dedicated temporary ID in uplink information, reducing the transmission duration, and improving the recognition efficiency.

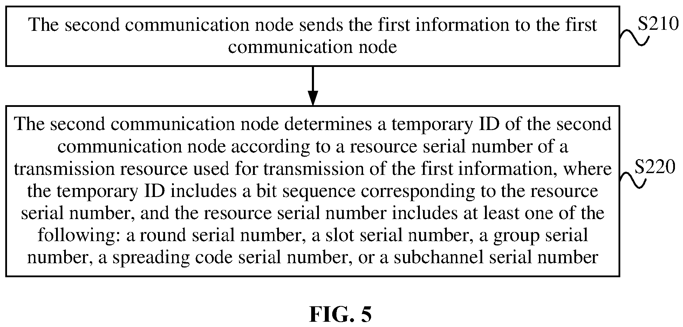

FIG. 5 is a flowchart of an information sending method according to an embodiment. As shown in FIG. 5, the method of this embodiment is applied to a second communication node. In this example, the first communication node (also referred to as a first communication node device) may be a base station, and the second communication node (also referred to as a second communication node device) may be a terminal device. The method includes S210 and S220.

In S210, the second communication node sends first information to a first communication node. In an embodiment, the first information may be uplink response information.

In S220, the second communication node determines a temporary ID of the second communication node according to a resource serial number of a transmission resource used for transmission of the first information, where the temporary ID includes a bit sequence corresponding to the resource serial number, and the resource serial number includes at least one of the following: a round serial number, a slot serial number, a group serial number, a spreading code serial number, or a subchannel serial number.

In an embodiment, the resource serial number includes the round serial number, where the round serial number is notified by the first communication node or determined according to the number of times a slot value range is updated.

In an embodiment, the resource serial number includes the slot serial number, where the slot serial number is randomly selected by the second communication node.

In an embodiment, the resource serial number includes the group serial number, where the group serial number is randomly selected by the second communication node; or the group serial number is the serial number of a fixed group of the second communication node; or the group number is determined according to the unique product number of the second communication node.

The operation of determining group number according to the unique product number of the second communication node includes that the second communication node can acquire group indication information, and when the group indication information is the same as a segment of identification bits in the unique product number of the second communication node, the second communication node determines the group serial number as a group serial number corresponding to the group indication information.

When the resource serial number includes the spreading code serial number, the spreading code serial number is randomly selected by the second communication node; or the spreading code serial number is the serial number of a fixed spreading code of the second communication node. Specifically, if the spreading code serial number is randomly selected by the second communication node, then the second communication node can acquire spreading code length indication information, where the spreading code length indication information indicates a spreading code length, and the spreading code serial number is a serial number of a spreading code randomly selected from a spreading code set corresponding to the spreading code length; or the second communication node can acquire repetition number indication information, where the repetition number indication information indicates the number of repetitions, the number of repetitions determines a spreading code length, and the spreading code serial number is the serial number of a spreading code randomly selected from a spreading code set corresponding to the spreading code length.

In an embodiment, the resource serial number includes the subchannel serial number, where the subchannel serial number is randomly selected by the second communication node; or the subchannel serial number is the serial number of a fixed subchannel of the second communication node.

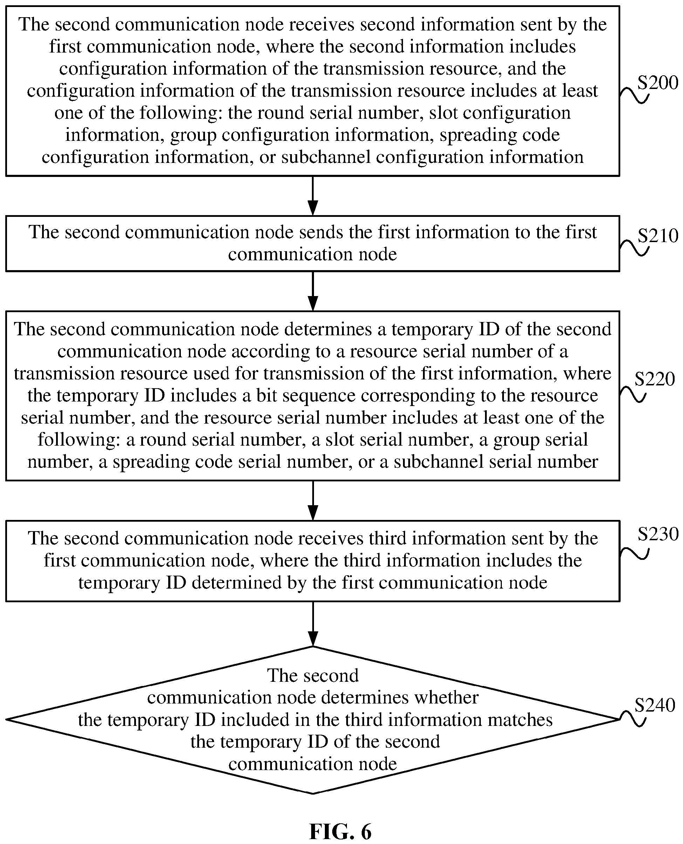

Based on the previous embodiment, FIG. 6 is a flowchart of another information sending method according to an embodiment. As shown in FIG. 6, the method includes S200, S210, S220, S230, and S240.

In S200, the second communication node receives second information sent by the first communication node, where the second information includes configuration information of the transmission resource, and the configuration information of the transmission resource includes at least one of the following: the round serial number, slot configuration information, group configuration information, spreading code configuration information, or subchannel configuration information.

The second information may be command information including the configuration information of the transmission resource. The configuration information of the transmission resource includes at least one of the following: the round serial number, slot configuration information, group configuration information, spreading code configuration information, or subchannel configuration information.

In S210, the second communication node sends the first information to the first communication node.

After receiving the second information sent by the first communication node, the second communication node sends the first information to the first communication node according to the configuration information of the transmission resource.

When the configuration information of the transmission resource includes the slot configuration information, the slot value range can be determined according to the slot configuration information. That is, after receiving the second information, the second communication node randomly selects a slot value in the determined slot value range and sends the first information in the slot corresponding to the selected slot value.

When the configuration information of the transmission resource includes the group configuration information, the group is a second communication node group, and the group configuration information includes the following modes:
Manner A1: The group configuration information is a piece of group indication information, second communication nodes matching the group indication information belong to one group, and a second communication node in the group sends the first information. That is, after receiving the second information, if the group serial number of the second communication node matches the group indication information, the second communication node sends the first information within the period of the group. The group serial number of the second communication node may be determined by a segment of identification bits included in the second communication node or may be a fixed group serial number.

Mode A2: The group configuration information indicates the number T of groups and is used for dividing second communication nodes into T groups. That is, after receiving the second information, the second communication node randomly selects a group from the T groups and sends the first information within the period of the selected group.

The period of the group includes that each time the first communication node sends the group indication information, the period of the previous group ends, or the period of the next group starts, and the period between two adjacent pieces of group indication information is the period of one group.

When the configuration information of the transmission resource includes the spreading code configuration information, the spreading code length may be determined according to the spreading code configuration information. That is, after receiving the second information, the second communication node determines the spreading code length and sends the first information by using the spreading code corresponding to the spreading code length.

The method for determining the spreading code length according to the spreading code configuration information includes that the spreading code configuration information is spreading code length indication information for indicating the spreading code length; or the spreading code configuration information is repetition number indication information for indicating the number of data transmission repetitions, and the spreading code length is determined according to the number of repetitions, where the number of repetitions is an integer multiple of the spreading code length, and the number of repetitions corresponds to the spreading code length.

Accordingly, the first information may be sent by using the spreading code corresponding to the spreading code length in one of the following manners:
Manner B1: The second communication node randomly selects a spreading code from the spreading code set corresponding to the spreading code length and sends the first information based on the selected spreading code.
Manner B2: The second communication node has a fixed spreading code. Specifically, one second communication node includes N spreading code lengths, each spreading code length corresponds to a fixed spreading code, and after determining the spreading code length, the second communication node sends the first information based on the corresponding spreading code.
Manner B3: The second communication node randomly generates a spreading code with the spreading code length and sends the first information based on the generated spreading code.

When the configuration information of the transmission resource includes the subchannel configuration information, N subchannel serial numbers may be determined according to the subchannel configuration information. That is, after receiving the second information, the second communication node randomly selects a subchannel serial number from the N subchannel serial numbers and sends the first information on the subchannel corresponding to the selected subchannel serial number.

In an embodiment, the first information includes any one of the following two forms.

Form one: The first information includes the unique product number of the second communication node.

Form two: The first information includes a random number of n bits or n bits in the unique product number of the second communication node.

In an embodiment, the temporary ID also includes the first information. Specifically, the temporary ID includes the bit sequence corresponding to the resource serial number and the bit sequence of the first information.

In S220, the second communication node determines a temporary ID of the second communication node according to a resource serial number of a transmission resource used for transmission of the first information, where the temporary ID includes a bit sequence corresponding to the resource serial number, and the resource serial number includes at least one of the following: a round serial number, a slot serial number, a group serial number, a spreading code serial number, or a subchannel serial number.

In the present application, the method for determining the resource serial number by the second communication node may include that when the resource serial number includes the round serial number, the round serial number is notified by the first communication node or determined by the number of updates of the slot value range. Each time the slot value range is updated, the round serial number is increased by 1. That is, when sending the first information, the second communication node determines that the current round serial number is the round serial number of the second communication node.

When the resource serial number includes the slot serial number, the second communication node selects a slot value from the slot value range. The selected slot value is the slot serial number of the second communication node.

When the resource serial number includes the group serial number, the second communication node has a fixed group serial number, or the second communication node randomly selects a group serial number, or the group number is determined by the unique product number of the second communication node.

The operation of determining the group number according to the unique product number of the second communication node includes that the second communication node can acquire group indication information, and when the group indication information is the same as a segment of identification bits in the unique product number of the second communication node, the second communication node determines the group serial number as a group serial number corresponding to the group indication information.

When the resource serial number includes the spreading code serial number, the spreading code length is determined according to the second information. In this case, the second communication node has a fixed spreading code with the spreading code length, or a spreading code is randomly selected from the spreading code set corresponding to the spreading code length, or a spreading code with the spreading code length is randomly generated. With a given spreading code length, spreading codes are in one-to-one correspondence with spreading code serial numbers, and a spreading code serial number can be determined according to a spreading code.

The method for determining the spreading code length according to the second information includes that the second information includes spreading code length indication information for indicating the spreading code length; or the second information includes repetition number indication information for indicating the number of data transmission repetitions, and the spreading code length is determined according to the number of repetitions, where the number of repetitions is an integer multiple of the determined spreading code length, and the number of repetitions corresponds to the spreading code length.

When the resource serial number includes the subchannel serial number, the second communication node has a fixed subchannel, or the second communication node randomly selects a subchannel from C subchannels.

In S230, the second communication node receives third information sent by the first communication node, where the third information includes the temporary ID determined by the first communication node.

In S240, the second communication node determines whether the temporary ID included in the third information matches the temporary ID of the second communication node.

In an embodiment, the first communication node may send the third information to the corresponding second communication node based on the temporary ID determined by the first communication node, where the third information sent by the first communication node includes the temporary ID determined by the first communication node.

The third information may be confirmation information about the temporary ID. After receiving the third information, the second communication node determines whether the temporary ID determined by the first communication node matches the temporary ID determined by the second communication node. If the matching is successful, the second communication node determines that the temporary ID is valid. If the matching fails, the second communication node may resend the first information by using an updated transmission resource.

Alternatively, the third information may also be other command information for the second communication node corresponding to the temporary ID, where the command information includes the temporary ID. After receiving the command information, the second communication node determines whether the received temporary ID matches the temporary ID of the second communication node. If the matching is successful, the second communication node determines that the temporary ID is valid. If the matching fails, the second communication node determines that the temporary ID is invalid. In this manner, the first communication node can send information to a single second communication node individually.

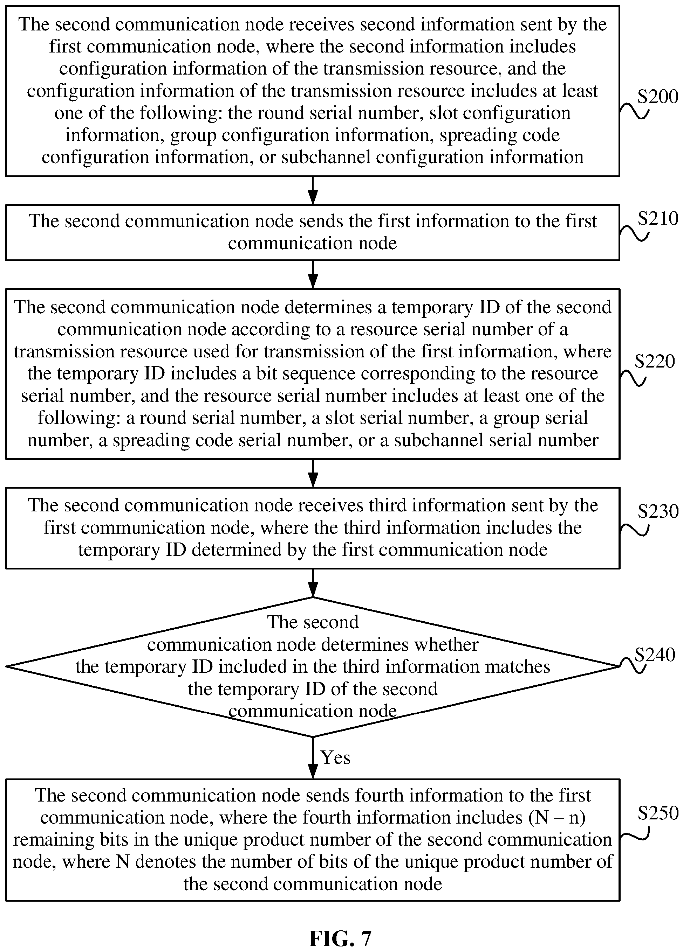

In an embodiment, if the first information includes n bits in the unique product number of the second communication node, as shown in FIG. 7, a flowchart of another information sending method according to an embodiment, the method also includes S250.

In S250, if the temporary ID included in the third information matches the temporary ID of the second communication node, the second communication node sends fourth information to the first communication node, where the fourth information includes (N - n) remaining bits in the unique product number of the second communication node, where N denotes the number of bits of the unique product number of the second communication node.

If the first information already includes n bits in the unique product number of the second communication node, the fourth information requires to include only (N - n) remaining bits in the unique product number of the second communication node, thereby reducing the bit overhead of a dedicated temporary ID in uplink information, reducing the transmission duration, and improving the recognition efficiency.

An embodiment of the present application provides an information sending method. The method is applied to a second communication node. The information sending method includes receiving a command sent by a first communication node, where the command includes configuration information of a transmission resource, and the configuration information of the transmission resource includes at least one of the following: slot configuration information, group configuration information, spreading code configuration information, or subchannel configuration information; and sending first information to the first communication node according to the configuration information of the transmission resource.

Specifically, when the configuration information of the transmission resource includes the group configuration information, the second communication node determines the number N of groups according to the group configuration information and randomly selects a value from the N values, where the selected value is the serial number of the selected group. Thus, one second communication node set may be divided into N groups. The second communication node whose group serial number is 0 sends the first information by using a slot, a spreading code, or a subchannel.

In an embodiment, a group count value decrement command sent by the first communication node is received. The group count value decrement command indicates that the group count value of the second communication node is reduced by 1. If the group count value of the second communication node is 0, the first information is sent by using a slot, a spreading code, or a subchannel.

Specifically, when the configuration information of the transmission resource includes the slot configuration information, the second communication node determines the slot value range according to the slot configuration information and randomly selects a slot value from the slot value range. The second communication node whose slot value is 0 sends the first information.

In an embodiment, a slot decrement command sent by the first communication node is received.

The slot decrement command indicates that the slot count value of the second communication node is reduced by 1. If the slot count value of the second communication node is 0, the first information is sent.

Specifically, when the configuration information of the transmission resource includes the spreading code configuration information, the second communication node determines the spreading code length according to the spreading code configuration information. Each second communication node has a fixed spreading code with the spreading code length. The second communication node sends the first information based on the spreading code with the spreading code length. Alternatively, the second communication node receives the spreading code configuration information, determines the spreading code length, randomly selects a spreading code from the spreading code set corresponding to the spreading code length, and sends the first information based on the selected spreading code.

Specifically, when the configuration information of the transmission resource includes the subchannel configuration information, the second communication node determines a subchannel set according to the subchannel configuration information, randomly selects a subchannel from the subchannel set, and sends the first information on the selected subchannel.

An embodiment of the present application provides a confirmation method of a temporary ID. The method includes determining the temporary ID of the second communication node according to the resource serial number of a transmission resource used for transmission of the first information by the second communication node. The resource serial number includes at least one of the following: a round serial number, a slot serial number, a group serial number, a spreading code serial number, or a subchannel serial number. The temporary ID includes the bit sequence corresponding to the resource serial number. The bit sequence corresponding to the resource serial number is a binary bit equivalent to the value of the resource serial number.

In an embodiment, if the resource serial number is the slot serial number, the temporary ID includes the bit sequence corresponding to the slot serial number; if the resource serial number is the spreading code serial number, the temporary ID includes the bit sequence corresponding to the spreading code serial number; if the resource serial number is the subchannel serial number, the temporary ID includes the bit sequence corresponding to the subchannel serial number; and if the resource serial number includes two or more of the round serial number, the slot serial number, the group serial number, the spreading code serial number, and the subchannel serial number, the temporary ID includes bit sequences in one-to-one correspondence with the two or more serial numbers. Examples are as follows:
Example one: If the resource serial number includes the slot serial number and the spreading code serial number, the temporary ID includes the bit sequence corresponding to the slot serial number and the bit sequence corresponding to the spreading code serial number.

Example two: If the resource serial number includes the group serial number and the spreading code serial number, the temporary ID includes the bit sequence corresponding to the group serial number and the bit sequence corresponding to the spreading code serial number.

Example three: If the resource serial number includes the slot serial number, the group serial number, and the round serial number, the temporary ID includes the bit sequence corresponding to the slot serial number, the bit sequence corresponding to the group serial number, and the bit sequence corresponding to the round serial number.

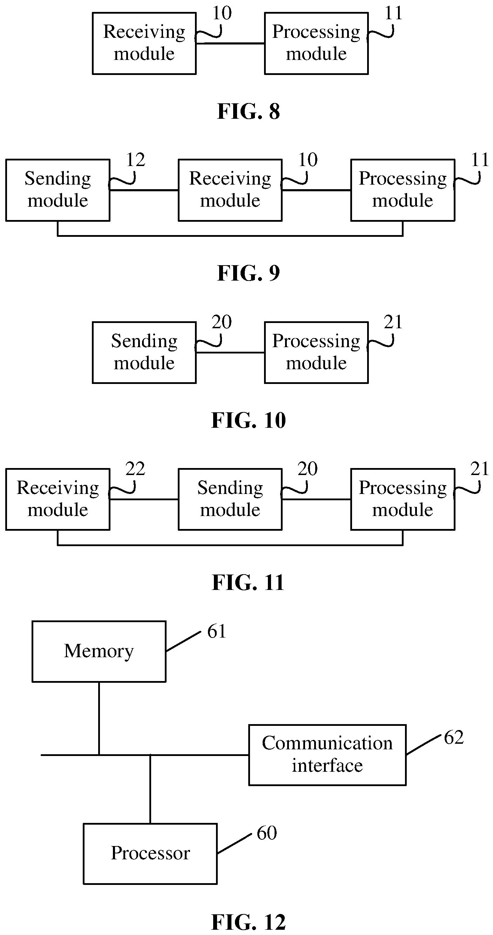

FIG. 8 is a diagram illustrating the structure of an information receiving apparatus according to an embodiment. The apparatus may be configured in a first communication node. As shown in FIG. 8, the apparatus includes a receiving module 10 and a processing module 11.

The receiving module 10 is configured to receive first information sent by a second communication node.

The processing module 11 is configured to determine a temporary ID of the second communication node according to a resource serial number of a transmission resource used for transmission of the first information. The temporary ID includes a bit sequence corresponding to the resource serial number. The resource serial number includes at least one of the following: a round serial number, a slot serial number, a group serial number, a spreading code serial number, or a subchannel serial number.

The information receiving apparatus of this embodiment is configured to perform the information receiving method of any one of the embodiments shown in FIG. 2 to FIG. 4. The implementation principles and technical effects of the information receiving apparatus of this embodiment are similar to those of the previous embodiments and thus are not described here again.

In an embodiment, referring to FIG. 8, and FIG. 9 is a diagram illustrating the structure of another information receiving apparatus according to an embodiment. As shown in FIG. 9, the apparatus also includes a sending module 12.

The sending module 12 is configured to, before the receiving module 10 receives the first information sent by the second communication node, send second information to the second communication node. The second information includes configuration information of the transmission resource. The configuration information of the transmission resource includes at least one of the following: the round serial number, slot configuration information, group configuration information, spreading code configuration information, or subchannel configuration information. In an embodiment, the resource serial number satisfies at least one of the following features: The resource serial number includes the round serial number, where the round serial number is determined according to the number of times a slot value range is updated; or the resource serial number includes the slot serial number, where the slot serial number is determined according to a slot in which the first information is correctly received; or the resource serial number includes the group serial number, where the group serial number is determined according to a group where the first information is correctly received; or the resource serial number includes the spreading code serial number, where the spreading code serial number is determined according to a spreading code through which despreading is correctly performed; or the resource serial number includes the subchannel serial number, where the subchannel serial number is determined according to a subchannel where the first information is located.

In an embodiment, the first information includes a random number of n bits or n bits in the unique product number of the second communication node.

In an embodiment, the temporary ID also includes the first information.

In an embodiment, the first information includes n bits in the unique product number of the second communication node, the sending module 12 is also configured to send third information to the second communication node, where the third information includes the temporary ID, and the receiving module 10 is also configured to receive fourth information sent by the second communication node, where the fourth information includes (N - n) remaining bits in the unique product number of the second communication node, where N denotes the number of bits of the unique product number of the second communication node.

FIG. 10 is a diagram illustrating the structure of an information sending apparatus according to an embodiment. The apparatus may be configured in a second communication node. As shown in FIG. 10, the apparatus includes a sending module 20 and a processing module 21.

The sending module 20 is configured to send first information to a first communication node.

The processing module 21 is configured to determine a temporary ID of the second communication node according to a resource serial number of a transmission resource used for transmission of the first information. The temporary ID includes a bit sequence corresponding to the resource serial number. The resource serial number includes at least one of the following: a round serial number, a slot serial number, a group serial number, a spreading code serial number, or a subchannel serial number.

The information sending apparatus of this embodiment is configured to perform the information sending method of any one of the embodiments shown in FIG. 5 to FIG. 7. The implementation principles and technical effects of the information sending apparatus of this embodiment are similar to those of the previous embodiments and thus are not described here again.

In an embodiment, referring to FIG. 10, and FIG. 11 is a diagram illustrating the structure of another information sending apparatus according to an embodiment. As shown in FIG. 11, the apparatus also includes a receiving module 22.

The receiving module 22 is configured to, before the sending module 20 sends the first information to the first communication node, receive second information sent by the first communication node. The second information includes configuration information of the transmission resource. The configuration information of the transmission resource includes at least one of the following: the round serial number, slot configuration information, group configuration information, spreading code configuration information, or subchannel configuration information.

The sending module 20 is configured to send the first information to the first communication node according to the configuration information of the transmission resource.

In an embodiment, the resource serial number includes the round serial number, where the round serial number is notified by the first communication node or determined according to the number of times a slot value range is updated.

In an embodiment, the resource serial number includes the slot serial number, where the slot serial number is randomly selected by the second communication node.

In an embodiment, the resource serial number includes the group serial number, where the group serial number is randomly selected by the second communication node; or the group serial number is the serial number of a fixed group of the second communication node; or the group number is determined according to the unique product number of the second communication node.

In an embodiment, the group number is determined according to the unique product number of the second communication node, and the processing module 21 is configured to acquire group indication information; and in response to the group indication information being the same as a segment of identification bits in the unique product number of the second communication node, the group serial number is a group serial number corresponding to the group indication information. In an embodiment, the resource serial number includes the spreading code serial number, where the spreading code serial number is randomly selected by the second communication node; or the spreading code serial number is the serial number of a fixed spreading code of the second communication node.

In an embodiment, the spreading code serial number is randomly selected by the second communication node, and the processing module 21 is configured to acquire spreading code length indication information, where the spreading code length indication information indicates a spreading code length, and the spreading code serial number is a serial number of a spreading code randomly selected from a spreading code set corresponding to the spreading code length; or acquire repetition number indication information, where the repetition number indication information indicates the number of repetitions, the number of repetitions determines a spreading code length, and the spreading code serial number is the serial number of a spreading code randomly selected from a spreading code set corresponding to the spreading code length.

In an embodiment, the resource serial number includes the subchannel serial number, where the subchannel serial number is randomly selected by the second communication node; or the subchannel serial number is the serial number of a fixed subchannel of the second communication node.

In an embodiment, the first information includes n bits in the unique product number of the second communication node, and the receiving module 22 is also configured to receive third information sent by the first communication node, where the third information includes a temporary ID determined by the first communication node, and the sending module 20 is configured to send fourth information to the first communication node, where the fourth information includes (N - n) remaining bits in the unique product number of the second communication node, where N denotes the number of bits of the unique product number of the second communication node.

An embodiment of the present application provides a communication node. The node includes a processor configured to perform the method of any previous embodiment when executing a computer program. Specifically, the communication node may be the access network device or the terminal device of any embodiment of the present application. This is not limited in the present application.

Illustratively, the following embodiments provide a diagram illustrating the structure of a base station as a communication node and a diagram illustrating the structure of a UE as a communication node:

FIG. 12 is a diagram illustrating the structure of a base station according to an embodiment. As shown in FIG. 12, the base station includes a processor 60, a memory 61, and a communication interface 62. One or more processors 60 may be provided in the base station, and one processor 60 is used as an example in FIG. 12. The processor 60, the memory 61, and the communication interface 62 that are in the base station may be connected through a bus or in other manners. In FIG. 12, the connection through the bus is used as an example. The bus represents one or more of several types of bus structures, including a memory bus or a memory controller, a peripheral bus, an Accelerated Graphics Port (AGP), a processor or a local bus using any bus structure among multiple bus structures.

As a computer-readable storage medium, the memory 61 may be configured to store software programs, computer-executable programs, and modules, such as program instructions/modules corresponding to the methods in the embodiments of the present application. The processor 60 executes the software programs, instructions and modules stored in the memory 61 to execute at least one of function applications and data processing of the base station, that is, to implement the method described above.

The memory 61 may include a program storage region and a data storage region, where the program storage region may store an operating system and an application program required by at least one function, and the data storage region may store data created depending on the use of the terminal. Additionally, the memory 61 may include a high-speed random-access memory or a nonvolatile memory such as at least one disk memory, a flash memory, or another nonvolatile solid-state memory. In some examples, the memory 61 may include memories which are remotely disposed relative to the processor 60, and these remote memories may be connected to the base station via a network. Examples of the preceding network include, but are not limited to, the Internet, an intranet, a network, a communication network and a combination thereof.

The communication interface 62 may be configured to receive and send data.

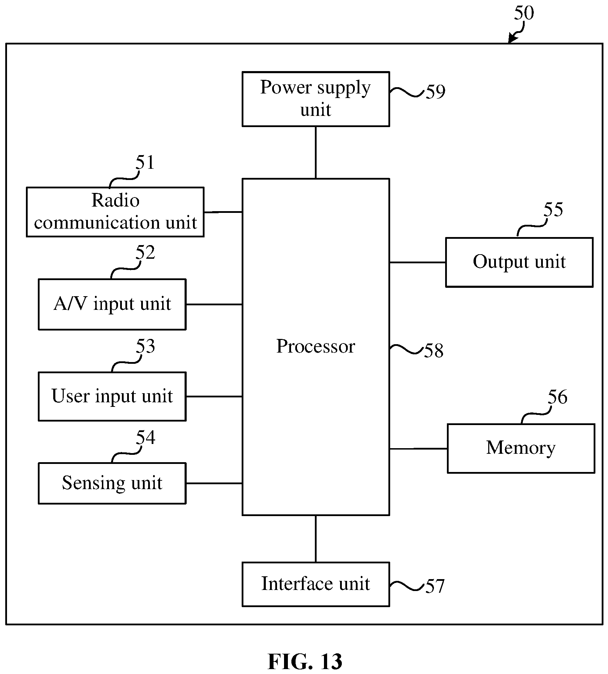

FIG. 13 is a diagram illustrating the structure of a UE according to an embodiment. The UE may be implemented in multiple forms. The UE in the present application includes, but is not limited to, a mobile terminal device and a fixed terminal device. The mobile terminal device may be, for example, a mobile phone, a smart phone, a notebook computer, a digital broadcast receiver, a personal digital assistant (PDA), a portable device (PAD), a portable media player (PMP), a navigation apparatus, a vehicle-mounted terminal device, a vehicle-mounted display terminal, and a vehicle-mounted electronic rearview mirror. The fixed terminal device may be, for example, a digital television (TV) and a desktop computer.

As shown in FIG. 13, the UE 50 may include a radio communication unit 51, an audio/video (A/V) input unit 52, a user input unit 53, a sensing unit 54, an output unit 55, a memory 56, an interface unit 57, a processor 58, and a power supply unit 59. FIG. 13 is a diagram illustrating the structure of a UE according to an embodiment. More or fewer components may be implemented instead. In the embodiment, the radio communication unit 51 allows radio communication between the UE 50 and a base station or a network. The A/V input unit 52 is configured to receive audio or video signals. The user input unit 53 may generate key input data according to commands input by the user to control various operations of the UE 50. The sensing unit 54 detects the current state of the UE 50, the location of the UE 50, the presence or absence of the user's touch input to the UE 50, the orientation of the UE 50, the acceleration or deceleration movement and direction of the UE 50 and so on, and generates commands or signals for controlling the operation of the UE 50. The interface unit 57 serves as an interface through which at least one external apparatus can be connected to the UE 50. The output unit 55 is configured to provide output signals in a visual, audio, and/or tactile manner. The memory 56 may store software programs for processing and controlling operations executed by the processor 58, etc., or may temporarily store data that has been output or will be output. The memory 56 may include at least one type of storage medium. Moreover, the UE 50 may cooperate with a network storage device that performs the storage function of the memory 56 through network connection. The processor 58 is generally configured to control the overall operation of the UE 50. The power supply unit 59 receives external power or internal power under the control of the processor 58 and provides appropriate power required to operate various members and assemblies.

The processor 58 executes the programs stored in the memory 56 to perform at least one function application and data processing, for example, to implement the method provided by the embodiments of the present application.

The embodiments of the present application further provide a computer-readable storage medium. The computer-readable storage medium is configured to store a computer program which, when executed by a processor, implements the method provided by any one of the embodiments of the present application.

A computer storage medium in an embodiment of the present application may adopt any combination of one or more computer-readable media. The computer-readable media may be computer-readable signal media or computer-readable storage media. The computer-readable storage medium may be, for example, but is not limited to, an electrical, magnetic, optical, electromagnetic, infrared or semiconductor system, apparatus or device, or any combination thereof. The computer readable storage medium includes (a non-exhaustive list): an electrical connection having one or more wires, a portable computer disk, a hard disk, a random access memory (RAM), a read-only memory (ROM), an electrically erasable, programmable read-only memory (EPROM), a flash memory, an optical fiber, a portable compact disk read-only memory (CD-ROM), an optical memory device, a magnetic memory device, or any suitable combination thereof. In the present application, the computer-readable storage medium may be any tangible medium including or storing a program. The program may be used by or used in conjunction with an instruction execution system, apparatus or device.

A computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by using any suitable medium including, but not limited to, a radio medium, a wire, an optical cable, radio frequency (RF) and the like, or any suitable combination thereof.

Computer program codes for executing the operations of the present disclosure may be written in one or more programming languages or a combination of multiple programming languages. The programming languages include object-oriented programming languages such as Java, Smalltalk, C + +, Ruby and Go, as well as conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer via any type of network (including a local area network (LAN) or a wide area network (WAN)) or may be connected to an external computer (for example, via the Internet through an Internet service provider).

It is to be understood by those skilled in the art that the term "user terminal" encompasses any suitable type of wireless user device, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware.

The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type appropriate for the local technical environment and may be implemented by using any appropriate data storage technology, such as, but not limited to, a read-only memory (ROM), a random-access memory (RAM), an optical memory device and system (a digital video disc (DVD) or a compact disk (CD)) and the like. The computer-readable media may include non-transitory storage media. A data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on multi-core processor architecture.

## Claims

1. An information receiving method, applied to a first communication node and comprising:
receiving first information sent by a second communication node; and
determining a temporary identifier, ID, of the second communication node according to a resource serial number of a transmission resource used for transmission of the first information, wherein the temporary ID comprises a bit sequence corresponding to the resource serial number, and the resource serial number comprises at least one of the following: a round serial number, a slot serial number, a group serial number, a spreading code serial number, or a subchannel serial number.

2. The method of claim 1, before receiving the first information sent by the second communication node, the method further comprising:
sending second information to the second communication node, wherein the second information comprises configuration information of the transmission resource, and the configuration information of the transmission resource comprises at least one of the following: the round serial number, slot configuration information, group configuration information, spreading code configuration information, or subchannel configuration information.

3. The method of claim 1, wherein the resource serial number satisfies at least one of the following features:
the resource serial number comprises the round serial number, wherein the round serial number is determined according to a number of times a slot value range is updated; or
the resource serial number comprises the slot serial number, wherein the slot serial number is determined according to a slot in which the first information is correctly received; or
the resource serial number comprises the group serial number, wherein the group serial number is determined according to a group where the first information is correctly received; or
the resource serial number comprises the spreading code serial number, wherein the spreading code serial number is determined according to a spreading code through which despreading is correctly performed; or
the resource serial number comprises the subchannel serial number, wherein the subchannel serial number is determined according to a subchannel where the first information is located.

4. The method of claim 1, wherein the first information comprises a random number of n bits or n bits in a unique product number of the second communication node.

5. The method of claim 4, wherein the temporary ID further comprises the first information.

6. The method of claim 4, the first information comprising the n bits in the unique product number of the second communication node, and the method further comprising:
sending third information to the second communication node, wherein the third information comprises the temporary ID; and
receiving fourth information sent by the second communication node, wherein the fourth information comprises (N - n) remaining bits in the unique product number of the second communication node, wherein N denotes a number of bits of the unique product number of the second communication node.

7. An information sending method, applied to a second communication node and comprising:
sending first information to a first communication node; and
determining a temporary ID of the second communication node according to a resource serial number of a transmission resource used for transmission of the first information, wherein the temporary ID comprises a bit sequence corresponding to the resource serial number, and the resource serial number comprises at least one of the following: a round serial number, a slot serial number, a group serial number, a spreading code serial number, or a subchannel serial number.

8. The method of claim 7, before sending the first information to the first communication node, the method further comprising:
receiving second information sent by the first communication node, wherein the second information comprises configuration information of the transmission resource, and the configuration information of the transmission resource comprises at least one of the following: the round serial number, slot configuration information, group configuration information, spreading code configuration information, or subchannel configuration information; and
sending the first information to the first communication node comprising:
sending the first information to the first communication node according to the configuration information of the transmission resource.

9. The method of claim 7, wherein the resource serial number comprises the round serial number, wherein the round serial number is notified by the first communication node or determined according to a number of times a slot value range is updated.

10. The method of claim 7, wherein the resource serial number comprises the slot serial number, wherein the slot serial number is randomly selected by the second communication node.

11. The method of claim 7, wherein the resource serial number comprises the group serial number, wherein
the group serial number is randomly selected by the second communication node; or
the group serial number is a serial number of a fixed group of the second communication node; or
the group number is determined according to a unique product number of the second communication node.

12. The method of claim 11, the group number being determined according to the unique product number of the second communication node, and the method further comprising:
acquiring group indication information; and
in response to the group indication information being the same as a segment of identification bits in the unique product number of the second communication node, the group serial number is a group serial number corresponding to the group indication information.

13. The method of claim 7, wherein the resource serial number comprises the spreading code serial number, wherein
the spreading code serial number is randomly selected by the second communication node; or
the spreading code serial number is a serial number of a fixed spreading code of the second communication node.

14. The method of claim 13, the spreading code serial number being randomly selected by the second communication node, and the method further comprising:
acquiring spreading code length indication information, wherein the spreading code length indication information indicates a spreading code length, and the spreading code serial number is a serial number of a spreading code randomly selected from a spreading code set corresponding to the spreading code length;
or
acquiring repetition number indication information, wherein the repetition number indication information indicates a number of repetitions, the number of repetitions determines a spreading code length, and the spreading code serial number is a serial number of a spreading code randomly selected from a spreading code set corresponding to the spreading code length.

15. The method of claim 7, wherein the resource serial number comprises the subchannel serial number, wherein
the subchannel serial number is randomly selected by the second communication node; or
the subchannel serial number is a serial number of a fixed subchannel of the second communication node.

16. The method of claim 7, the first information comprising n bits in a unique product number of the second communication node, and the method further comprising:
receiving third information sent by the first communication node, wherein the third information comprises a temporary ID determined by the first communication node, wherein the temporary ID matches the temporary ID comprised in the third information; and
sending fourth information to the first communication node, wherein the fourth information comprises (N - n) remaining bits in the unique product number of the second communication node, wherein N denotes a number of bits of the unique product number of the second communication node.

17. A communication node, comprising a processor configured to perform the information receiving method of any one of claims 1 to 6 or the information sending method of any one of claims 7 to 16 when executing a computer program.

18. A computer-readable storage medium storing a computer program which, when executed by a processor, causes the processor to perform the information receiving method of any one of claims 1 to 6 or the information sending method of any one of claims 7 to 16.
